# FASCICULE DE BREVET EUROPEEN

(11) **EP 1 247 696 B1**
(45) Date de publication et mention de la délivrance du brevet: **17.08.2005**
(21) Numéro de dépôt: 02290835.4
(22) Date de dépôt: 04.04.2002
(51) Int. Cl.: B60R 13/04, B60R 19/02

(54) **Elément extérieur de véhicule automobile, intégrant un capteur capacitif et pièce de carrosserie comportant un tel élément extérieur**
Kraftfahrzeugaussenelement und Integration eines kapazitiven Sensors und Karosserieteil mit einem solchen Aussenelement
Exterior motor vehicle element, integrating a capacitive sensor and body part having such an exterior element

(30) Priorité: 04.04.2001 FR 0104600
(43) Date de publication de la demande: 09.10.2002
(73) Titulaire: COMPAGNIE PLASTIC OMNIUM, 69007 Lyon (FR)
(72) Inventeur: Fayt, Arnold, 39240 Aromas (FR); Hilmarcher, Olivier, 01460 Montreal la Cluse (FR); Guyon, Sébastian, 01460 Montreal la Cluse (FR)
(74) Mandataire: de la Bigne, Guillaume Michel Marie

(56) Documents cités:
- EP-A- 0 952 046
- WO-A-89/08352
- GB-A- 2 348 505
- US-A- 4 951 985
- US-A- 5 394 292
- US-A- 5 801 340

## Description

La présente invention concerne un élément extérieur de véhicule automobile, intégrant un capteur capacitif.

On connaît déjà, dans l'état de la technique, des dispositifs d'aide à la conduite comprenant des radars à ultrasons.

Ces dispositifs procurent de bons résultats mais sont relativement coûteux compte tenu de leur grande complexité. C'est la raison pour laquelle on les trouve presque exclusivement sur des véhicules de haut de gamme.

De plus, ils présentent un inconvénient esthétique du fait que l'émetteur-capteur du radar doit être dégagé dans son champ de vision pour pouvoir fonctionner. Etant donné que de tels émetteurs-capteurs sont généralement logés dans les boucliers de pare-chocs, cela requiert que les bouclier soient percés, ce qui ne va pas sans créer quelques difficultés quant à l'esthétique du véhicule et à la fragilité des capteurs.

En outre, les capteurs à ultrasons sont actuellement relativement lourds et fournissent une enveloppe de détection peu homogène.

Par ailleurs, une autre technique de vision artificielle permet de déceler les mouvements d'éventuels obstacles au voisinage du véhicule : la détection par capteur capacitif.

Selon cette technique, on place, sur le pare-chocs du véhicule, une antenne qui forme un condensateur avec chaque objet qui l'entoure, et notamment avec d'éventuels obstacles que le véhicule peut venir heurter.

La distance entre l'antenne et chacun de ces objets est un des facteurs déterminant la capacité du condensateur ainsi formé. Par conséquent, à partir d'une mesure de cette capacité par des moyens électroniques, on peut calculer la distance séparant l'antenne de l'objet, ou au moins l'accroissement ou la diminution de cette distance, à partir d'une mesure des variations de la capacité du condensateur. Un tel système est par exemple connu du document DE-A-4 951 985.

Mais la difficulté de cette technique réside dans la manière de positionner une antenne sur une pièce de carrosserie.

L'invention a pour but de proposer une nouvelle implantation d'antenne de capteur de proximité capacitif qui soit simple et économique à réaliser et à installer sur un véhicule, tout en remplissant pleinement sa fonction de capteur capacitif.

A cet effet, l'invention propose l'utilisation d'un bandeau extérieur telle que décrite à la revendication 1.

Au sens de la présente invention, on entend par écran protecteur non conducteur un écran qui d'une part, est réalisé en un matériau électriquement non conducteur et d'autre part, n'a pas subi de traitement lui conférant des propriétés électriquement conductrices.

Un exemple de traitement susceptible de conférer des propriétés électriquement conductrices à un écran initialement non conducteur est celui de la peinture électrostatique de pièces en matière plastique. En effet, il est connu de revêtir de telles pièces, initialement non conductrices, d'un apprêt conducteur qui assure la fixation de particules de peinture chargées électriquement et projetées sur lesdites pièces.

Par conséquent, pour être considéré comme non conducteur, selon l'invention, un écran protecteur coloré devra avoir été soit peint par une technique de peinture non électrostatique, soit teinté dans la masse, soit recouvert d'un film décoratif surmoulé non conducteur.

Selon l'invention, le film portant un matériau conducteur sur ses deux faces constitue une antenne conductrice qui, associée à un dispositif électronique de mesure de capacité, joue le rôle d'un capteur capacitif. Associé à l'écran protecteur, ce capteur forme un élément qui peut être rapporté en différents emplacements sur le véhicule.

Avantageusement le bandeau peut être réalisé en matière plastique.

Dans un but ornemental, et en fonction du style du véhicule, la matière plastique peut être choisie transparente ou translucide, afin de laisser voir le film portant les deux couches de matériau conducteur.

Dans ce cas, il est avantageux qu'au moins sur la face du film visible de l'extérieur, le matériau électriquement conducteur forme un motif ajouré, de préférence régulier, qui confère au film, vu à travers l'écran transparent ou translucide, une fonction décorative marquant le style du véhicule et éventuellement soulignant la présence du capteur capacitif sur le véhicule.

Le choix du motif ajouré peut être déterminé par des impératifs techniques, compte-tenu de l'efficacité recherchée de l'antenne, et par des impératifs esthétiques, en vue d'obtenir un aspect décoratif particulier.

En outre, le fait que le matériau conducteur forme un motif ajouré procure une économie de ce matériau, qui est potentiellement assez coûteux, sans que cela ne nuise à l'efficacité du capteur car une couche continue de matériau conducteur serait de toute façon inutile compte tenu de la fonction recherchée.

Le matériau conducteur peut être une encre conductrice ou tout autre matériau conducteur, choisi en fonction des propriétés de conductivité requises pour l'application envisagée.

Le matériau conducteur peut être déposé par sérigraphie sur au moins une des faces du film et un vernis peut être ajouté pour le recouvrir et le protéger.

Comme matière plastique transparente, on peut utiliser, selon l'invention, un méthacrylate, un polypropylène ou un polycarbonate.

La matière plastique peut être opaque.

Elle peut alors conserver sa couleur initiale ou être teintée dans la masse, ce qui est généralement compatible, sur le plan esthétique, avec une utilisation comme baguette de protection de bouclier de pare-chocs.

Selon une utilisation particulière de l'invention, le film électriquement isolant est réalisé en un polyester thermoplastique. Par exemple, le polyester est celui commercialisé par Général Electric Plastics sous la marque VALOX FR-1.

Ledit film peut être conformé par thermoformage à une configuration géométrique particulière correspondant à l'écran protecteur.

En fonction de l'emplacement de l'élément sur le véhicule, différents modes de fixation du film et de l'écran protecteur peuvent être envisagés.

Ainsi, le film peut être fixé au bandeau (à l'écran protecteur) ou directement fixé au véhicule, le bandeau (l'écran protecteur) étant fixé au véhicule, par dessus le film.

La fixation du film sur le bandeau (l'écran protecteur) peut résulter d'un agencement du bandeau (de l'écran) laissant, entre sa paroi intérieure et le véhicule, un espace étroit dans lequel le film est retenu en sandwich et demeure plan par sa seule rigidité.

Le film peut également être collé ou soudé à la paroi intérieure du bandeau (de l'écran protecteur).

Une autre possibilité est de surmouler le bandeau (l'écran protecteur) sur le film.

D'autres moyens de fixation peuvent encore être envisagés, comme par exemple des formes spécifiques du bandeau (de l'écran), telles que des languettes dans le cas d'un bandeau (écran) opaque.

L'invention sera mieux comprise à la lecture de la description qui va suivre, donnée uniquement à titre d'exemple et faite en se référant aux dessins dans lesquels :
- la figure 1 est une vue de trois-quart arrière d'un véhicule automobile muni d'un élément extérieur selon l'invention,
- la figure 2 est un éclaté schématique d'une antenne incorporée dans un élément extérieur selon l'invention,
- la figure 3 est une vue en perspective avec arraché partiel du bouclier arrière et de l'élément extérieur du véhicule de la figure 1 montrant l'antenne de la figure 2 en situation,
- les figures 4 à 6 sont des vues analogues à la figure 3 montrant des variantes de fixation du film et de l'écran protecteur l'un par rapport à l'autre et par rapport au bouclier,
- la figure 7 est une vue rapprochée du bouclier et du bandeau de la figure 1.

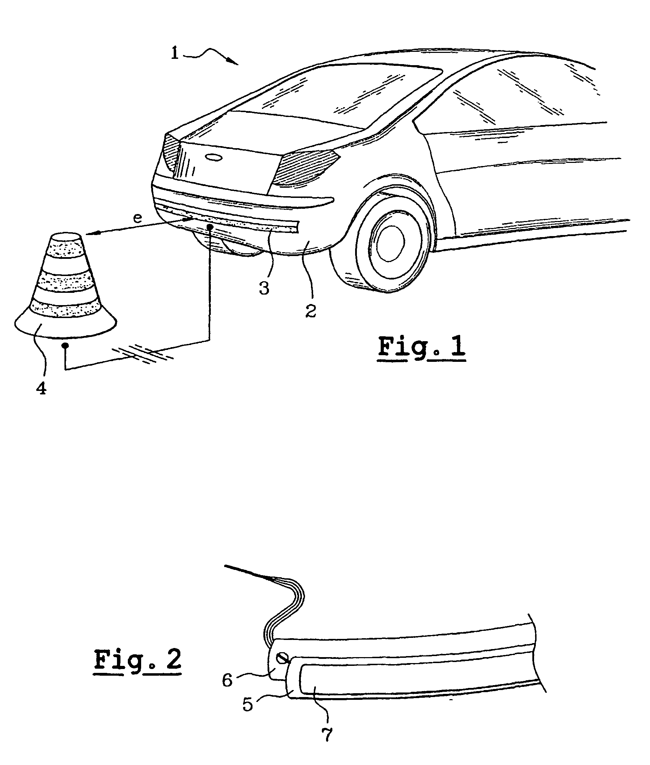

On a représenté, sur la figure 1, un véhicule automobile 1 comportant un bouclier arrière 2 muni d'un bandeau protecteur 3.

Ce véhicule effectue une manoeuvre de recul en direction d'un plot 4 situé à une distance e du point le plus proche du véhicule, à savoir le bandeau 3.

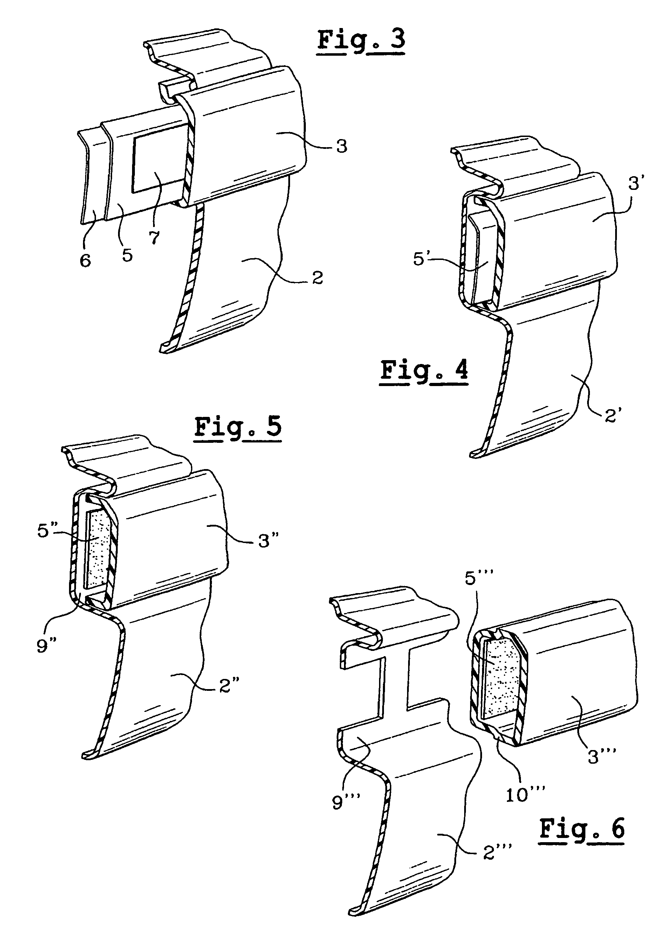

Le bandeau 3 constitue un écran protecteur au sens de l'invention, c'est-à-dire qu'il renferme une antenne telle que représentée à la figure 2.

Cette antenne comprend un film électriquement isolant 5, par exemple réalisé en VALOX FR-1 (marque déposée de GE Plastics) recouvert sur chacune de ses deux faces d'un matériau électriquement conducteur 6,7, par exemple de l'encre conductrice.

Du côté intérieur, c'est-à-dire dirigé vers l'habitacle du véhicule lorsque le bandeau 3 est en place, le film 5 est recouvert par de l'encre conductrice sur toute sa surface 6 tandis que du côté extérieur, c'est-à-dire dirigé vers le bandeau, le film n'est recouvert par de l'encre conductrice que dans sa partie centrale 7.

La géométrie précise de cette partie centrale 7 sera déterminée aisément par l'homme du métier en fonction des caractéristiques souhaitées de l'antenne.

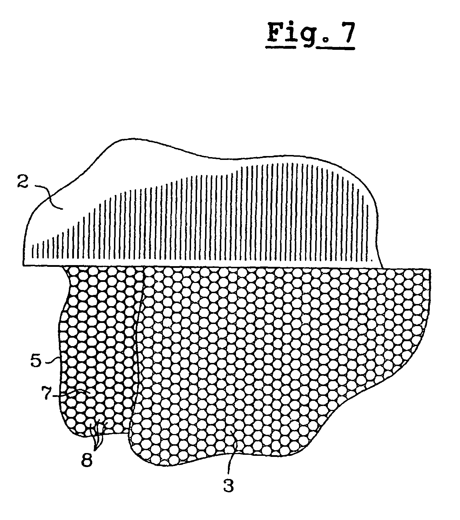

La couverture d'encre conductrice n'est pas constituée par une couche continue mais présente un motif ajouré formant un réseau, comme on le voit à la figure 7 où le bandeau 3 est transparent. Dans l'exemple de la figure 7, les ajours 8 du motif sont des orifices circulaires situés aux noeuds d'un réseau régulier à maille triangulaire, ce qui, en plus de limiter la quantité d'encre conductrice nécessaire à la réalisation de l'antenne, remplit une fonction décorative en combinaison avec le bandeau transparent 3.

Différents aspects peuvent ainsi être obtenus en choisissant un bandeau 3 transparent ou translucide, coloré ou non, un film 5 teinté et un motif particulier réalisé avec un matériau conducteur éventuellement coloré.

Dans les exemples des figures 3 et 7, le film 5 tient entre le bandeau 3 et le bouclier 2 par sa seule rigidité, ses contours étant adaptés au volume étroit laissé libre entre ledit bandeau et ledit bouclier.

Dans l'exemple de la figure 4, le film 5' est collé sur la face intérieure du bandeau 3', lequel est de préférence opaque et sert de bandeau de protection aux chocs en saillie du bouclier 2'. Un tel bandeau est souvent teinté dans la masse.

Dans l'exemple de la figure 5, le film 5" est collé sur le bouclier 2", au fond de la gorge 9" ménagée pour recevoir le bandeau 3". Dans ce cas, le bandeau peut être transparent.

Dans l'exemple de la figure 6, le bouclier 2''' comporte une gorge 9''' prévue pour recevoir un boîtier longitudinal 10''', en une ou deux parties, dont la partie extérieure sert de bandeau 3"' et dont la partie intérieure supporte le film 5"'. Ce boîtier longitudinal 10''' présente l'intérêt de pouvoir assurer une étanchéité vis-à-vis de l'extérieur pour protéger le film constituant l'antenne.

D'autres modes de fixation du film et du bandeau peuvent également être envisagés par l'homme du métier.

## Revendications

1. Utilisation d'un bandeau extérieur (3, 3', 3", 3"') non conducteur, de protection d'un panneau de portière, d'un ouvrant arrière ou d'un bouclier de pare-chocs d'un vehicule automobile (1), en tant qu'écran protecteur (3, 3', 3", 3"') d'un capteur capacitif de proximité, ledit capteur capacitif:
- étant rapporté sur la portière, l'ouvrant ou le bouclier (2, 2', 2'', 2'''),
- étant disposé derrière l'écran protecteur (3, 3', 3", 3"'),
- étant apte à détecter d'éventuels obstacles (4) que le véhicule peut venir heurter, et
- comprenant un film (5, 5', 5", 5"') électriquement isolant comportant deux faces dont chacune est au moins partiellement revêtue d'un matériau électriquement conducteur (6, 7).

2. Utilisation d'un bandeau selon la revendication 1, le bandeau (3, 3', 3", 3"') étant réalisé en matière plastique.

3. Utilisation d'un bandeau selon la revendication 2. la matière plastique étant transparente ou translucide.

4. Utilisation d'un bandeau selon la revendication 3, la matière plastique étant un méthalcrylate, un polypropylène ou un polycarbonate.

5. Utilisation d'un bandeau selon la revendication 2, la matière plastique étant opaque.

6. Utilisation d'un bandeau selon la revendication 5, la matière plastique étant colorée par teinture dans la masse, par peinture non électrostatique ou par surmoulage d'un film.

7. Utilisation d'un bandeau selon l'une quelconque des revendications 1 à 6, le film (5,5',5",5"') électriquement isolant étant réalisé en un polyester thermoplastique.

8. Utilisation d'un bandeau selon l'une quelconque des revendications 1 à 7, le matériau électriquement conducteur formant un motif ajouré (8), au moins sur une face.

9. Utilisation d'un bandeau selon l'une quelconque des revendications 1 à 8, le film (5, 5', 5", 5"') électriquement isolant étant conformé par thermoformage à une configuration géométrique particulière correspondant au bandeau (3, 3', 3", 3"').

10. Utilisation d'un bandeau selon l'une quelconque des revendications 1 à 9, le film (5, 5', 5", 5"') électriquement isolant étant fixé au bandeau (3, 3', 3", 3"').

11. Utilisation d'un bandeau selon l'une quelconque des revendications 1 à 9, le film (5, 5', 5", 5"') électriquement isolant étant directement fixé au véhicule et le bandeau (3, 3', 3", 3"') étant également directement fixé au véhicule, par dessus le film (5, 5', 5", 5"') électriquement isolant.

## Patentansprüche

1. Verwendung eines nichtleitenden äußeren Bandes (3.3', 3", 3"'), zum Schutz einer Türverkteidung, einer Heckklappe oder einer Stoßstangenverkleidung eines Kraftfahrzeugs (1), als Schutzabschirmung (3, 3', 3", 3"') eines kapazitiven Abstandssensors, wobei besagter kapazitiver Sensor:
- auf der Fahrzeugtür, der Klappe oder der Verkieidung (2, 2', 2", 2"') angebracht ist,
- hinter der Schutzabschirmung (3, 3', 3", 3"') angeordnet ist,
- geeignet ist, um mögliche Hindemisse (4) zu erkennen, an die das Fahrzeug stoßen kann, und
- einen elektrisch isolierenden Film (5, 5', 5", 5"') umfasst, der zwei Flächen aufweist, von denen jede zumindest teilweise mit einem elektrisch leitenden Material (6,7) versehen ist.

2. Verwendung eines Bandes nach Anspruch 1, wobei das Band (3, 3', 3", 3"') aus Kunststoff hergestellt ist.

3. Verwendung eines Bandes nach Anspruch 2, wobei der Kunststoff durchsichtig oder durchscheinend ist.

4. Verwendung eines Bandes nach Anspruch 3, wobei der Kunststoff ein Methacrylat, ein Polypropylen oder ein Polykarbonat ist.

5. Verwendung eines Bandes nach Anspruch 2, wobei der Kunststoff opak ist.

6. Verwendung eines Bandes nach Anspruch 5, wobei der Kunststoff durch Spinnfärbung, durch nicht elektrostatische Farbe oder durch Aufspritzen eines Films koloriert ist.

7. Verwendung eines Bandes nach einem der Ansprüche 1 bis 6, wobei der elektrisch isolierende Film (5, 5', 5", 5"') aus einem thermoplastischen Polyester hergestellt ist.

8. Verwendung eines Bandes nach einem der Ansprüche 1 bis 7, wobei das elektrisch leitende Material auf mindestens einer Seite ein durchbrochenes Muster (8) bildet.

9. Verwendung eines Bandes nach einem der Ansprüche 1 bis 8, wobei der elektrisch isolierende Film (5, 5', 5", 5"') mittels Thermoformung an eine besondere geometrische Form angepasst ist, welche dem Band (3, 3', 3", 3''') entspricht.

10. Verwendung eines Bandes nach einem der Ansprüche 1 bis 9, wobei der elektrisch isolierende Film (5, 5', 5", 5''') an dem Band (3, 3', 3", 37"') befestigt ist.

11. Verwendung eines Bandes nach einem der Ansprüche 1 bis 9, wobei der elektrisch isolierende Film (5, 5', 5", 5"') unmittelbar an dem Fahrzeug befestigt ist und das Band (3, 3', 3", 3"') ebenfalls unmittelbar an dem Fahrzeug über dem elektrisch isolierenden Film (5, 5', 5", 5"') befestigt ist.

## Claims

1. Using of an non-conductive outside protecting capping (3,3',3",3"') for door panel, rear door or bumper shield of a motor vehicle (1) as a protective screen (3,3',3",3"') of a proximity capacity sensor, in which said capacity sensor :
- is fitted onto the door panel, the rear door, or the bumper shield (2,2',2",2"')
- is situated behind the protective screen (3,3',3'',3''')
- is able to detect possible obstacle (4) that the vehicle could come to bump, and
- comprises an electrically insulating film (5,5',5 ",5 "') having two faces, each of which is coated at least in part in an electrically conductive material(6, 7).

2. Using of a capping according to claim 1, in which the capping (3,3',3",3''') is made of a plastics material.

3. Using of a capping according to claim 2, in which the plastics material is transparent or translucent.

4. Using of a capping according to claim 3, in which the plastics material is a methacrylate, a polypropylene, or a polycarbonate.

5. Using of a capping according to claim 2, in which the plastics material is opaque.

6. Using of a capping according to claim 5, in which the plastics material is colored by being bulk-dyed, by non-electrostatic painting, or by overmolding a film.

7. Using of a capping according to claims 1 to 6, in which the electrically insulating film (5, 5', 5", 5"') is made of a thermoplastic polyester.

8. Using of a capping according to claims 1 to 7, in which the electrically conductive material forms an open-work pattern (8), at least on one face.

9. Using of a capping according to claims 1 to 8, in which the electrically insulating film (5, 5', 5", 5"') is shaped by thermoforming to have a particular geometrical configuration corresponding to the capping (3, 3', 3", 3''').

10. Using of a capping according to claims 1 to 9, in which the electrically insulating film (5, 5', 5", 5"') is fixed to the capping (3,3',3",3"').

11. Using of a capping according to claims 1 to 9, in which the electrically insulating film (5, 5', 5", 5"')is fixed directly to the vehicle, and in which the capping (3,3',3",3"') is likewise fixed directly to the vehicle, over the electrically insulating film (5, 5', 5", 5"').
